# EUROPÄISCHE PATENTSCHRIFT

(11) **EP 1 772 399 B1**
(45) Veröffentlichungstag und Bekanntmachung des Hinweises auf die Patenterteilung: **26.08.2009**
(21) Anmeldenummer: 06020861.8
(22) Anmeldetag: 04.10.2006
(51) Int. Cl.: B65G 1/04

(54) **Regalsystem**
Shelf system
Système de rayonnage

(30) Priorität: 06.10.2005 DE 102005047980
(43) Veröffentlichungstag der Anmeldung: 11.04.2007
(73) Patentinhaber: STILL GmbH, 22113 Hamburg (DE)
(72) Erfinder: Brüning, Jörg, 21465 Reinbek (DE); Dürlich, Andreas, 22955 Hoisdorf (DE)
(74) Vertreter: Geirhos, Johann

(56) Entgegenhaltungen:
- EP-A- 0 324 964
- WO-A-98/04482
- DE-A1- 2 319 534
- JP-A- 10 087 020
- JP-A- 49 036 075
- JP-A- 51 031 468
- JP-A- 61 064 605
- JP-A- 2002 080 107
- US-A- 3 800 963

## Beschreibung

Die Erfindung betrifft ein Regal zur Verwendung in einem Lagersystem, wobei das Regal Fahrschienen für mindestens ein Shuttle-Fahrzeug aufweist, weiche in mindestens einer Regalzeile des Regals montiert sind, sodass die Regalzeile als Shuttle-Regal betreibbar ist, wobei die hinteren Regalplätze der Regalzeile mit dem Shuttle-Fahrzeug erreichbar sind, wobei an den Seiten jeder Regalzeile des Regals vertikale Säulen angeordnet und das Regal Befestigungselemente für die Fahrschienen aufweist, die für den Betrieb einer Regalzeile als Shuttle-Regal an den der betreffenden Regalzeile benachbarten Säulen befestigt sind.

Einfahrregale bestehen aus mehreren parallel nebeneinander angeordneten Regalzeilen. Jede Regalzeile besteht aus mehreren hintereinander angeordneten Lagerplätze und mehreren übereinander angeordneten Regalebenen. Jede Regalebene ist durch Auflageelemente für Paletten definiert, die in der Regel von Schienen gebildet sind, an den Seiten der Regalzeile angeordnet sind und sich längs der Regalzeile erstrecken. Das Be- und Entladen des Einfahrregals erfolgt mittels eines Flurförderzeugs, das beispielsweise als Gegengewichtsgabelstapler, als Schubmaststapler, als Mitfahrerhochhubwagen oder als Mitgängerhochhubwagen ausgeführt sein kann.

Ein leeres Einfahrregal wird in folgender Reihenfolge beladen: Zuerst werden die hintersten Lagerplätze in der Reihenfolge von unten nach oben belegt, anschließend werden die zweithintersten Lagerplätze von unten nach oben belegt, dann die dritthintersten Lagerplätze von unten nach oben, usw. Das Entladen des Einfahrregals erfolgt in umgekehrter Reihenfolge, also beginnend mit den vordersten Lagerplätzen.

Sowohl beim Beladen, als auch beim Entladen wird die Höhe des Lastaufnahmemittels des Flurförderzeugs vor dem Einfahren in die Regalzeile auf die entsprechende Regalebene eingestellt. Das Flurförderzeug fährt dann mit angehobenem Lastaufnahmemittel und einer gegebenenfalls darauf befindlichen Last in die Regalzeile ein bzw. heraus.

Da die Lagerplätze des Einfahrregals nur in der oben beschriebenen Reihenfolge zugänglich sind, kann jede Regalzeile ausschließlich mit einheitlichen Waren beladen werden. Die Vielfalt der Waren, die in dem Einfahrregal eingelagert werden kann, ist hierdurch stark eingeschränkt.

Shuttle-Regale sind als spezielle Regalform für sich genommen bekannt. Shuttle-Regale bestehen ebenfalls aus mehreren parallel nebeneinander angeordneten Regalzeilen, wobei jede Regalzeile aus mehreren hintereinander angeordneten Lagerplätzen und mehreren übereinander angeordneten Regalebenen besteht. In jede Regalebene einer Regalzeile kann ein Shuttle-Fahrzeug eingesetzt werden, das auf horizontalen Fahrschienen in der betreffenden Regalebene entlang der Regalzeile verfahrbar ist. Das Shuttle-Fahrzeug kann dabei Paletten mit den darauf befindlichen Waren zwischen den Regalplätzen transportieren. Mit dem Flurförderzeug ist nur der vorderste Regalplatz jeder Regalebene der Regalzeile erreichbar, sodass das Flurförderzeug Paletten ausschließlich von dem vordersten Regalplatz aufnimmt oder dort abstellt. Der Transport der Paletten mit den gegebenenfalls darauf befindlichen Lasten von dem vordersten Regalplatz zu den hinteren Regalplätzen - und zurück - erfolgt mittels des Shuttle-Fahrzeugs. Bei einem Shuttle-Regal muss jede Regalebene einer Regalzeile mit einheitlichen Waren beladen werden. Die verschiedenen Regalebenen der Regalzeile können jedoch mit unterschiedlichen Waren beladen sein.

Aus der EP 0 324 964 A1 ist ein Lagersystem umfassend ein Regal gemäß dem Oberbegriff des Anspruchs 1 bekannt. Die vorderen Regalplätze der Regalzeile sind hierbei mit dem Flurförderzeug erreichbar und die hinteren Regalplätze mit dem Shuttle-Fahrzeug. Zum Umsetzten des Shuttle-Fahrzeugs in die Regalzeilen sind spezielle Umsetzfahrzeuge (Trolley-Carrier) vorgesehen, die mit in Verlängerung der Fahrschienen angeordneten Schienenabschnitten versehen sind.

Der vorliegenden Erfindung liegt daher die Aufgabe zugrunde, ein Regal zu schaffen, das eine höhere erzielbare Warenumschlagsleistung ermöglicht.

Diese Aufgabe wird durch ein Regal mit den Merkmalen des Anspruchs 1 erfindungsgemäß dadurch gelöst.

Die Querstreben dienen zur Erhöhung der Stabilität des Regals. Dies ist aufgrund der dynamischen Kräfte, die das Shuttle-Fahrzeug auf das Regal ausübt, erforderlich. Zwischen dem vorderen Säulenpaar, vorzugsweise zwischen den vorderen beiden Säulenpaaren, befinden sich erfindungsgemäß keine Querstreben. Hierdurch wird ein Einlagern von Paletten in die vordersten Regalplätze sowie ein Einsetzen des Shuttle-Fahrzeugs im Bereich der vordersten Regalplätze einer Regalebene ermöglicht, ohne dass die Gefahr einer Kollision mit einer Querstrebe besteht. Das Shuttle-Fahrzeug selbst kann hierdurch ebenfalls mittels des Flurförderzeugs an dem vordersten Regalplatz in die betreffende Regalebene der Regalzeile eingesetzt werden oder daraus entnommen werden.

Das erfndungsgemäße Regal ermöglicht es weiter, einen Teil der Regalzeilen des Regals als Einfahrregal und den anderen Teil als Shuttle-Regal zu betreiben. Weiter ist es mit dem System möglich, bestehende Einfahrregale zu Shuttle-Regalen umzurüsten.

Die genannten Säulen sind Bestandteil der tragenden Struktur des Regals. Die Befestigungselemente werden dann an den links und rechts der Regalzeile angeordneten Säulen angebracht. Auf den Befestigungselementen sind dann die Fahrschienen für das Shuttle-Fahrzeug befestigt.

Das Regal weist in jeder Regalebene Auflageelemente für Paletten auf.

Zweckmäßigerweise sind die Auflageelemente als Schienen ausgeführt. Die Schienen erstrecken sich längs der Regalzeile auf jeder Regalebene.

Die Fahrschienen sind derart an dem Regal befestigbar, dass ein Shuttle-Fahrzeug auf der Fahrschiene unterhalb einer auf den Auflageelementen befindlichen Palette verfahrbar ist und dass die Palette mittels des Shuttle-Fahrzeugs von dem Auflageelement abhebbar ist. Diese Funktionsweise ist bereits bei Regalen bekannt, die ausschließlich als Shuttle-Regal betrieben werden können.

Die Aufgabe der Erfindung wird ferner durch das Lagersystem des Anspruchs 5 gelöst.

Dabei ist mindestens ein Shuttle-Fahrzeug derart ausgeführt, dass es mittels des Flurförderzeugs in eine Regaleben der als Shuttle-Regal betriebenen Regalzeile einsetzbar ist und dass es mittels des Flurförderzeugs aus der betreffenden Regalebene entnehmbar ist.

Gemäß einer zweckmäßigen Weiterbildung der Erfindung ist zur Steuerung der Flurförderzeuge ein Staplerleitsystem vorgesehen, wobei das mindestens eine Shuttle-Fahrzeug mit demselben Staplerleitsystem steuerbar ist. Mit dem Staplerleitsystem werden der Bedienperson des Flurförderzeugs Fahraufträge übermittelt und wird deren Durchführung überwacht. Die Shuttle-Fahrzeuge werden mittels desselben Staplerleitsystems ferngesteuert. Hierbei kann die Fernsteuerung des Shuttle-Fahrzeugs manuell durch die Bedienperson des Flurförderzeugs an einem in dem Flurförderzeug angeordneten Bedienterminal für das Staplerleitsystem erfolgen. Ebenfalls möglich ist es, dass das Shuttle-Fahrzeug durch das Staplerleitsystem automatisch angesteuert wird.

Weitere Vorteile und Einzelheiten der Erfindung werden anhand des in den schematischen Figuren dargestellten Ausführungsbeispiels näher erläutert. Dabei zeigt
- Figur 1: ein Einfahrregal das kein Teil der Erfindung ist,
- Figur 2: die vordersten Regalplätze des als Shuttle-Regal betriebenen Regals,
- Figur 3: hinteren Regalplätze des als Shuttle-Regal betriebenen Regals.

Die Figuren zeigen jeweils die unteren beiden Regalebenen 6 zweier Regalzeilen 3 eines Regals. Das gesamte Regal ist wesentlich breiter und höher ausgeführt und besteht tatsächlich aus einer Vielzahl nebeneinander angeordneter Regalzeilen und vorzugsweise aus insgesamt fünf Regalebenen 6.

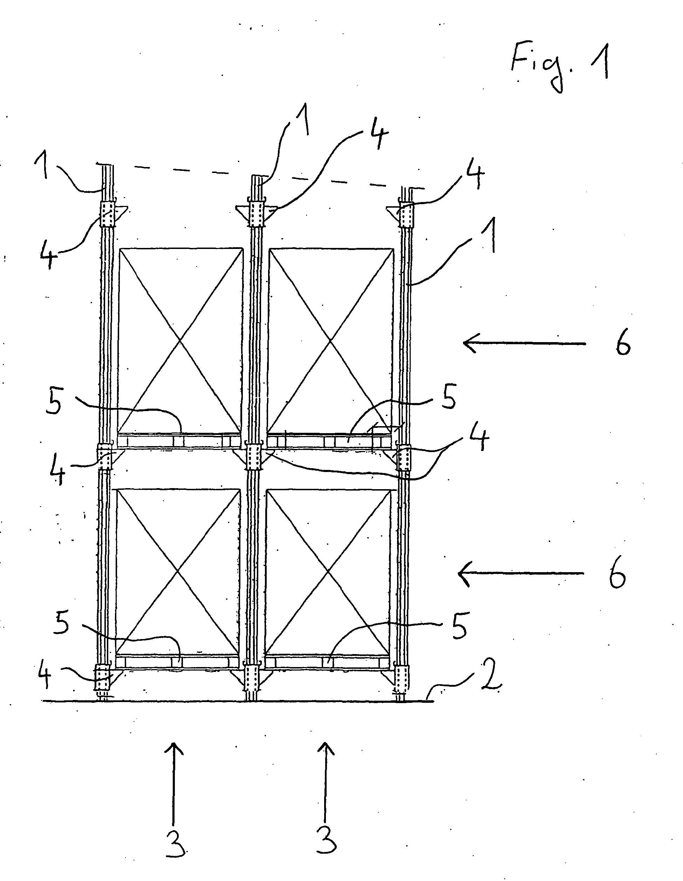

In Figur 1 ist ein Einfahrregal dargestellt. Die tragenden Bauteile des Regals sind vertikale, am Boden 2 stehende Säulen 1. Zwischen den Säulen 1 befinden sich die Regalzeilen 3. Weiter sind an den Säulen 1 als Schienen ausgeführte Auflageelemente 4 für Paletten 5 angeordnet. Die Auflageelemente 4 definieren die Regalebenen 6, wobei in der Figur die erste und die zweite Regalebene 6, also die beiden untersten Regalebenen 6 dargestellt sind.

Bei der Ausführung des Regals als Einfahrregal kann mit einem Flurförderzeug, beispielsweise einem Schubmaststapler, in die Regalzeilen 3 eingefahren werden. Das als Gabel ausgeführte Lastaufnahmemittel des Flurförderzeugs wird dabei bereits vor dem Einfahren in die Regalzeile auf die Höhe der betreffenden Regalebene 6 eingestellt. Das Einlagern von Waren in eine Regalzeile erfolgt von hinten nach vorne, das Auslagern von Waren erfolgt in umgekehrter Reihenfolge von vorne nach hinten.

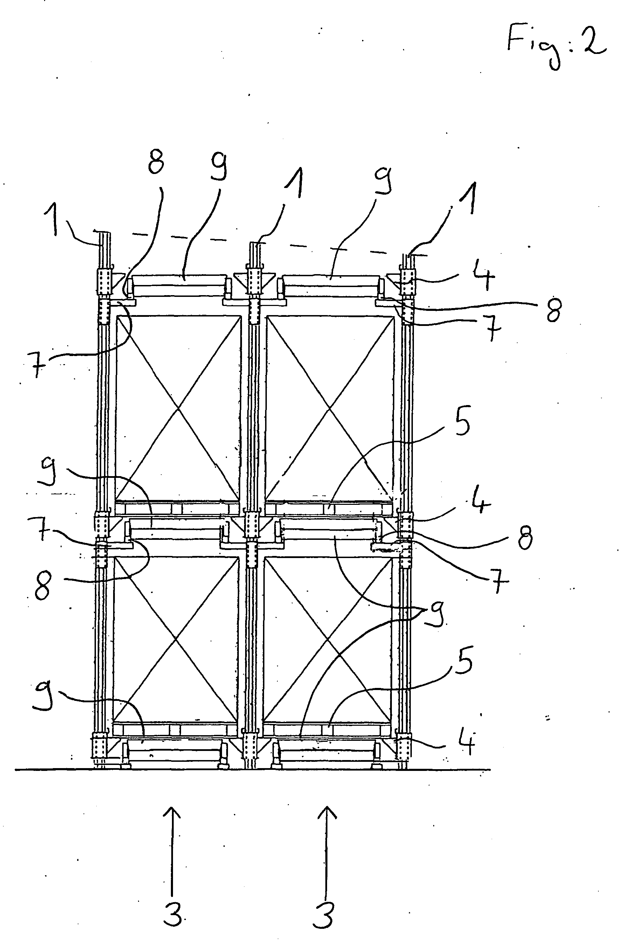

Figur 2 zeigt die vordersten Regalplätze des als Shuttle-Regal betriebenen erfindungsgemäßen Regals. Der Unterschied gegenüber der Anordnung gemäß Fig. 1 besteht darin, dass an den Säulen 1 Befestigungselemente 7 für Fahrschienen 8 befestigt sind. Die untersten Fahrschienen 8 für die unterste Regalebene 6 sind mittels Zwischenstücken am Boden befestigt. Auf den Fahrschienen sind Shuttle-Fahrzeuge 9 in Längsrichtung der Regalzeilen 3 verfahrbar. Im dargestellten abgesenkten Zustand der Shuttle-Fahrzeuge 9 können sich die Shuttle-Fahrzeuge dabei frei unter den Paletten 5 hindurch bewegen. Zum Transportieren einer Palette 5 wird ein Shuttle-Fahrzeug 9 unter die Palette 5 bewegt und anschließend wird die Oberseite des Shuttle-Fahrzeugs 9 durch ein in das Shuttle Fahrzeug 9 integriertes Stellglied angehoben. Die Palette 5 hebt dabei von den Auflageelementen 4 ab und kann dann mit dem Shuttle-Fahrzeug 9 in horizontaler Richtung innerhalb der Regalzeile 4 bewegt werden.

In Fig. 2 sind die vorderen Regalplätze des Regals dargestellt, in denen sich die Befestigungselemente 7 nicht durchgehend zwischen den Säulen 1 erstrecken. Dies ermöglicht einen Transport der Shuttle-Fahrzeuge 9 mittels des außerhalb des Regals befindlichen Flurförderzeugs. Es muss also nicht jede Regalebene 6 jeder Regalzeile 3 ein eigenes Shuttle-Fahrzeug besitzen. Stattdessen kann das Shuttle-Fahrzeug 9 bei Bedarf mit dem Flurförderzeug auf die entsprechenden Fahrschienen 8 gesetzt werden. Es kann dabei dasselbe Flurförderzeug verwendet werden, das auch zum Aufnehmen der Paletten 5 aus den dargestellten vorderen Regalplätzen eingesetzt wird.

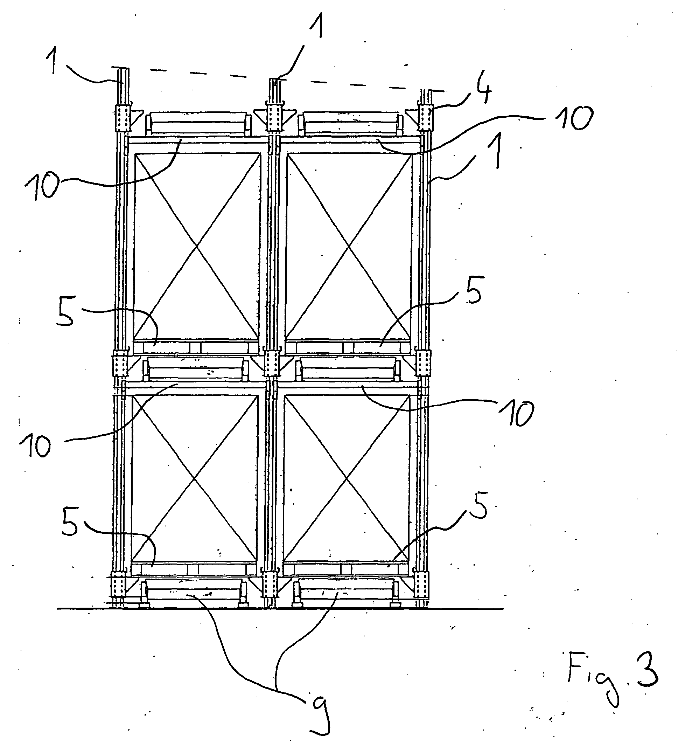

Figur 3 zeigt die hinteren Regalplätze des als Shuttle-Regal betriebenen erfindungsgemäßen Regals. Der Unterschied gegenüber den vorderen Regalplätzen gemäß Fig. 2 besteht darin, dass die Befestigungselemente für die Fahrschienen 8 von durchgehenden Querstreben 10 gebildet sind. Die Querstreben 10 verbinden die gegenüber liegenden Säulen 1 über die Regalzeile 3 hinweg. Hierdurch wird die Stabilität des Regals insgesamt erhöht, sodass es den erhöhten Belastungen durch das sich bewegende Shuttle-Fahrzeug standhält.

## Patentansprüche

1. Regal zur Verwendung in einem Lagersystem, wobei das Regal Fahrschienen (8) für mindestens ein Shuttle-Fahrzeug (9) aufweist, welche in mindestens einer Regalzeile (3) des Regals montiert sind, sodass die Regalzeile (3) als Shuttle-Regal betreibbar ist, wobei die hinteren Regalplätze der Regalzeile (3) mit dem Shuttle-Fahrzeug (9) erreichbar sind, wobei an den Seiten jeder Regalzeile (3) des Regals vertikale Säulen (1) angeordnet sind und das Regal Befestigungselemente (7) für die Fahrschienen (8) aufweist, die für den Betrieb einer Regalzeile (3) als Shuttle-Regal an den der betreffenden Regalzeile (3) benachbarten Säulen (1) befestigt sind,
**dadurch gekennzeichnet,**
**dass** das Regal Querstreben aufweist, die für den Betrieb einer Regalzeile (3) als Shuttle-Regal quer zur Regalzeile (3) an den der betreffenden Regalzeile (3) benachbarten Säulen (1) befestigt sind, wobei für den Betrieb einer Regalzeile (3) als Shuttle-Regal die Querstreben ausschließlich ab der zweiten, vorzugsweise ausschließlich ab der dritten der der Regalzeile (3) benachbarten Säulen (1) befestigt sind, so dass die vorderen Regalplätzen dieser Regalzeile mit einem Flurförderzeug erreichbar sind.

2. Regal nach Anspruch 1, **dadurch gekennzeichnet, dass** das Regal in jeder Regalebene Auflageelemente (4) für Paletten aufweist.

3. Regal nach Anspruch 2, **dadurch gekennzeichnet, dass** die Auflageelemente (4) als Schienen ausgeführt sind.

4. Regal nach einem der Ansprüche 2 oder 3, **dadurch gekennzeichnet, dass** die Fahrschienen (8) derart an dem Regal befestigt sind, dass ein Shuttle-Fahrzeug (9) auf der Fahrschiene (8) unterhalb einer auf den Auflageelementen (4) befindlichen Palette verfahrbar ist und dass die Palette mittels des Shuttle-Fahrzeugs (9) von dem Auflageelement (4) abhebbar ist.

5. Lagersystem umfassend ein Regal nach einem der Ansprüche 1 bis4, mit mindestens einem Flurföderzeug und mindestens einem Shuttle-Fahrzeug (9).

6. Lagersystem nach Anspruch 5, **dadurch gekennzeichnet, dass** das mindestens eine Shuttle-Fahrzeug (9) derart ausgeführt ist, dass es mittels des Flurförderzeugs in eine Regaleben (6) der als Shuttle-Regal betriebenen Regalzeile (3) einsetzbar ist und dass es mittels des Flurförderzeugs aus der betreffenden Regalebene (6) entnehmbar ist.

7. Lagersystem nach einem der Ansprüche 5 oder 6, **dadurch gekennzeichnet, dass** zur Steuerung der Flurförderzeuge ein Staplerleitsystem vorgesehen ist, wobei das mindestens eine Shuttle-Fahrzeug (9) mit demselben Staplerleitsystem steuerbar ist.

## Claims

1. Rack for use in a warehouse storage system, the rack having running rails (8) for at least one shuttle vehicle (9), which running rails are fitted in at least one rack row (3) of the rack, with the result that the rack row (3) can be operated as a shuttle rack, it being possible for the rear rack locations of the rack row (3) to be reached with the shuttle vehicle (9), with vertical columns (1) being arranged on the sides of each rack row (3) of the rack and the rack having fastening elements (7) for the running rails (8), which are fastened, for the operation of a rack row (3) as a shuttle rack, on the columns (1) adjacent to the relevant rack row (3), **characterized in that** the rack has transverse struts which, for the operation of a rack row (3) as a shuttle rack, are fastened on the columns (1) adjacent to the relevant rack row (3) transversely with respect to the rack row (3), with, for the operation of a rack row (3) as a shuttle rack, the transverse struts being fastened only from the second, preferably only from the third, of the columns (1) adjacent to the rack row (3), with the result that the front rack locations of this rack row can be reached with an industrial truck.

2. Rack according to Claim 1, **characterized in that** the rack has resting elements (4) for pallets in each rack plane.

3. Rack according to Claim 2, **characterized in that** the resting elements (4) are in the form of rails.

4. Rack according to either of Claims 2 and 3, **characterized in that** the running rails (8) are fastened on the rack in such a way that a shuttle vehicle (9) can be moved on the running rail (8) beneath a pallet located on the resting elements (4), and that the pallet can be lifted off from the resting element (4) by means of the shuttle vehicle (9).

5. Warehouse storage system comprising a rack according to one of Claims 1 to 4, with at least one industrial truck and at least one shuttle vehicle (9).

6. Warehouse storage system according to Claim 5, **characterized in that** the at least one shuttle vehicle (9) is designed in such a way that it can be inserted into a rack plane (6) of the rack row (3), which is operated as a shuttle rack, by means of the industrial truck, and **in that** it can be removed from the relevant rack plane (6) by means of the industrial truck.

7. Warehouse storage system according to either of Claims 5 and 6, **characterized in that** a stacker management system is provided for controlling the industrial trucks, with it being possible for the at least one shuttle vehicle (9) to be controlled by the same stacker management system.

## Revendications

1. Rayonnage pour l'utilisation dans un système de stockage, le rayonnage présentant des rails de conduite (8) pour au moins un véhicule navette (9), qui sont montés dans au moins une rangée de rayonnage (3) du rayonnage, de sorte que la rangée de rayonnage (3) puisse être utilisée comme rayonnage navette, les places de rayonnage arrière de la rangée de rayonnage (3) pouvant être accessibles avec le véhicule navette (9), sur les côtés de chaque rangée de rayonnage (3) du rayonnage étant disposées des colonnes verticales (1) et le rayonnage présentant des éléments de fixation (7) pour les rails de conduite (8), qui sont fixés pour l'utilisation d'une rangée de rayonnage (3) en tant que rayonnage navette sur les colonnes (1) adjacentes à la rangée de rayonnage (3) concernée,
**caractérisé en ce que**
le rayonnage présente des montants transversaux, qui sont fixés pour le fonctionnement d'une rangée de rayonnage (3) en tant que rayonnage navette transversalement à la rangée de rayonnage (3) sur les colonnes (1) adjacentes à la rangée de rayonnage (3) concernée, pour l'utilisation d'une rangée de rayonnage (3) en tant que rayonnage navette, les montants transversaux étant fixés exclusivement à partir de la deuxième, mais de préférence exclusivement à partir de la troisième des colonnes (1) adjacentes à la rangée de rayonnage (3), de sorte que les places de rayonnage avant de cette rangée de rayonnage puissent être atteintes avec un chariot de manutention.

2. Rayonnage selon la revendication 1, **caractérisé en ce que** le rayonnage présente, dans chaque plan de rayonnage, des éléments d'appui (4) pour des palettes.

3. Rayonnage selon la revendication 2, **caractérisé en ce que** les éléments d'appui (4) sont réalisés sous forme de rails.

4. Rayonnage selon l'une quelconque des revendications 2 ou 3, **caractérisé en ce que** les rails de conduite (8) sont fixés sur le rayonnage de telle sorte qu'un véhicule navette (9) puisse être déplacé sur le rail de conduite (8) sous une palette se trouvant sur les éléments d'appui (4), et que la palette puisse être soulevée au moyen du véhicule navette (9) depuis l'élément d'appui (4).

5. Système de stockage comprenant un rayonnage selon l'une quelconque des revendications 1 à 4, comprenant au moins un chariot de manutention et au moins un véhicule navette (9).

6. Système de stockage selon la revendication 5, **caractérisé en ce que** l'au moins un véhicule navette (9) est réalisé de telle sorte qu'il puisse être utilisé au moyen du chariot de manutention dans un plan de rayonnage (6) de la rangée de rayonnage (3) utilisée comme rayonnage navette et qu'il puisse être enlevé au moyen du chariot de manutention hors du plan de rayonnage (6) en question.

7. Système de stockage selon l'une quelconque des revendications 5 ou 6, **caractérisé en ce que** pour la commande des chariots de manutention, on prévoit un système de conduite de chariot élévateur, l'au moins un véhicule navette (9) pouvant être commandé avec le même système de conduite de chariot élévateur.
